# EUROPEAN PATENT APPLICATION

(11) **EP 1 052 827 A2**
(43) Date of publication of application: **15.11.2000**
(21) Application number: 00303939.3
(22) Date of filing: 10.05.2000
(51) Int. Cl.: H04L 29/06

(54) **Dynamic resource modification in a communication network**

(30) Priority: 10.05.1999 US 309138
(71) Applicant: Nortel Networks Limited, Montreal, Quebec H2Y 3Y4 (CA)
(72) Inventor: Squire, Matthew B., Raleigh, NC 27613 (US)
(74) Representative: Dearling, Bruce Clive

(57) **Abstract**

Dynamic resource modification of a web page involves receiving the web page (804), modifying the web page (806), and forwarding (808) the modified web page. Dynamic resource modification may be used to delete an element from the web page, modify an element of the web page, or to add an element to the web page.

## Description

### FIELD OF THE INVENTION

The present invention relates generally to communication networks, and, more particularly, to dynamic resource modification in a communication network.

### BACKGROUND OF THE INVENTION

In today's information age, data communication networks are evolving as an ever-increasing number of communication consumers require access to on-line computer resources. Much of this growth can be attributed directly to the pervasiveness of the Internet. The Internet is a communication network that allows computers around the world to exchange information. One of the most popular applications for exchanging information over the Internet is the World Wide Web.

The World Wide Web is a client-server application that is used to retrieve information over the Internet. The client utilizes a particular communication protocol to retrieve information from the destination server. In World Wide Web parlance, the client is referred to as the "web browser", the destination server is referred to as the "web server", and the information retrieved by the web browser is referred to as a "web page". The most common communication protocol that is used by the web browser to retrieve a web page is the HyperText Transfer Protocol (HTTP).

In the World Wide Web application, each web page is typically formatted using the HyperText Markup Language (HTML). HTML is a language that provides constructs for defining the content and format of the web page. Among other things, the web page can include text, video (both still and motion), audio, and references to other web pages.

The ability of the web page to include references to other web pages is one of the most powerful features of HTML. These other web pages can be on the same server as the web page or on different servers throughout the Internet. When the web page is presented to the consumer, the consumer can typically select one of the references, for example, by using a "mouse" device, and the referenced web page is automatically retrieved by the web browser and presented to the consumer.

### SUMMARY OF THE INVENTION

In accordance with one aspect of the invention, dynamic resource modification is used to modify a web page. Specifically, a device receives the web page, modifies the web page, and forwards the modified web page. The web page may be modified by deleting an element from the web page, modifying an element in the web page, adding an element to the web page, or any combination of these actions.

In accordance with another aspect of the invention, dynamic resource modification is used by a cache server in order to redirect requests as part of a network caching scheme. In one exemplary embodiment, the cache server modifies the web page, stores the modified web page in the cache memory, retrieves the modified web page from the cache memory upon receiving a request for the web page from a web browser and forwards the modified web page to the web browser. In another exemplary embodiment, the cache server stores the web page in the cache memory, retrieves the web page from the cache memory upon receiving a request for the web page from a web browser, modifies the web page, and forwards the modified web page to the web browser. In yet another exemplary embodiment, the cache server makes a first number of modifications that are common to all web browsers, stores the modified web page in the cache memory, retrieves the modified web page from the cache memory upon receiving a request for the web page from a web browser, makes a second number of modifications that are customized for that request, and forwards the modified web page to the web browser.

### BRIEF DESCRIPTION OF THE DRAWINGS

Exemplary embodiments of the present invention will now be described with reference to the accompanying drawings, in which:
FIG. 1 is a block diagram showing a simple communication network in which a web browser in a client computer communicates with a web server over the Internet;
FIG. 2 is a block diagram showing the format of a generic Universal Resource Locator as is known in the art;
FIG. 3A is a block diagram showing a first exemplary transparent caching scheme;
FIG. 3B is a block diagram showing a second exemplary transparent caching scheme using resource redirection;
FIG. 4 is a block diagram showing the format of a modified Universal Resource Locator used in a preferred embodiment of the present invention;
FIG. 5 is a logic flow diagram showing exemplary cache server logic for using dynamic resource modification in a first exemplary embodiment of the present invention;
FIG. 6 is a logic flow diagram showing exemplary cache server logic for using dynamic resource modification in a second exemplary embodiment of the present invention;
FIG. 7 is a logic flow diagram showing exemplary cache server logic for using dynamic resource modification in a third exemplary embodiment of the present invention; and
FIG. 8 is a logic flow diagram showing exemplary logic for performing dynamic resource modification by a device in accordance with a preferred embodiment of the present invention.

### DETAILED DESCRIPTION OF A PREFERRED EMBODIMENT

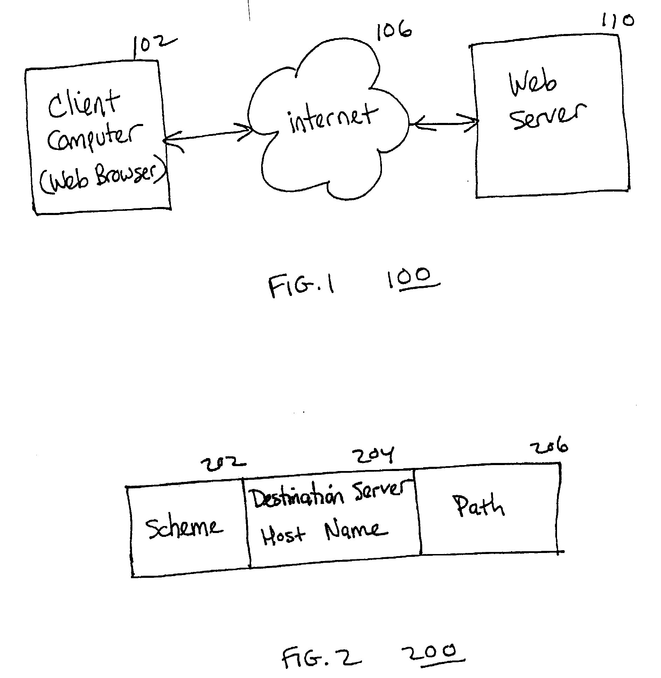

FIG. 1 is a block diagram showing a simple communication network 100 in which a web browser in a client computer 102 communicates with a web server 110 over an internet 106, which can be the Internet or a private IP internetwork. The web pages are stored on the web server 110. The web browser retrieves a web page from the web server 110 and presents the web page to the communication consumer.

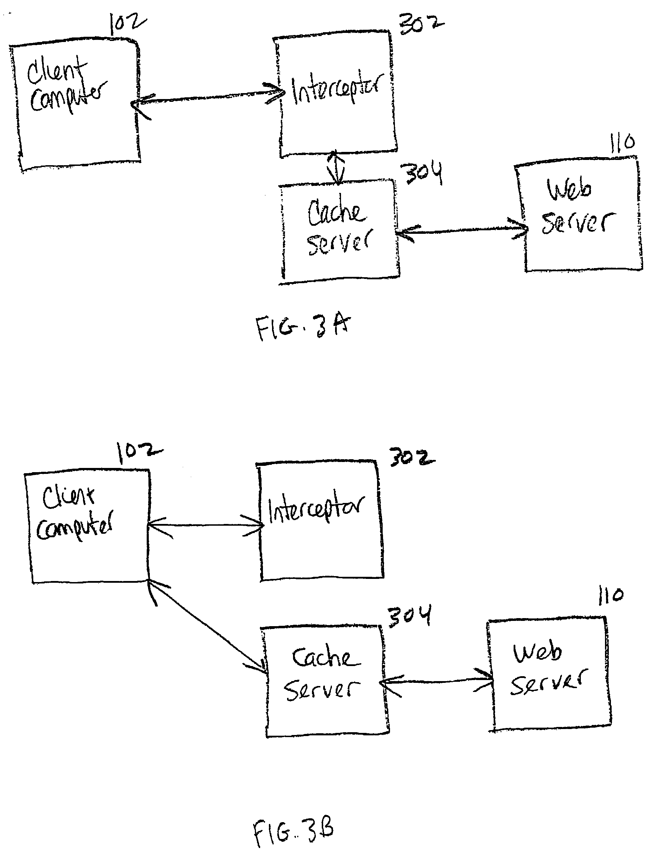

In order to retrieve a web page from the web server 110, the web browser sends a request to the web server 110 that includes, among other things, a Universal Resource Locator (URL) that identifies the specific web page to be retrieved. FIG. 2 shows the generic format of a URL 200. The URL 200 includes a scheme 202 indicating the protocol being used to retrieve the web page (typically HTTP), a destination server host name 204 indicating the name of the web server 110, and a path 206 indicating a directory and file name where the web page is stored on the web server 110. The destination server host name 204 can be either a domain name with which the web server 110 is associated or an Internet Protocol address of the web server 110. The text string "http://www.web-server.com/directory/subdirectory/filename" is an example of a fictitious URL, where "http" is the scheme 202, "www.web-server.com" is the web server host name (domain name) 204, and "/directory/subdirectory/filename" is the path 206.

In a preferred embodiment of the present invention, a web page retrieved from the web server 110 is modified before the web page is presented by the web browser to the consumer. Such modification (referred to hereinafter as "dynamic resource modification") can include deleting an HTML entry from the web page, modifying an HTML entry in the web page, adding an HTML entry to the web page, or any combination of these actions. Dynamic resource modification can be done by an intermediate device within the Internet 106 (for example, by a router or cache server) or within the client computer 102, for example, by the web browser itself.

A preferred embodiment of the present invention employs dynamic resource modification in a transparent caching scheme. In a transparent caching scheme, an intermediate communication device (referred to hereinafter as a "cache server") receives the web page tram the web server 110 and stores the web page in a cache memory. Another intermediate communication device (referred to hereinafter as an "interceptor") intercepts web browser requests for the web page and redirects the wet browser requests to the cache server. Upon receiving a web browser request, the cache server retrieves the web page from the cache memory and sends the web page to the web browser. As a result, the web browser receives the web page from the cache server rather than from the web server 110. Such a caching scheme is typically employed to reduce the traffic load on the web server 110 and to reduce the amount of time it takes for the web browser to receive the web page.

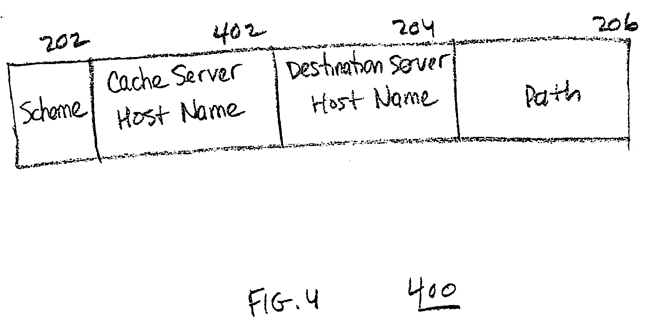

In a first transparent caching scheme (referred to as the "transparent caching model" in the related application, and depicted herein by FIG. 3A), the interceptor 302 may intercept a web browser request destined for a URL in the web server 110 and redirects the intercepted web browser request to the cache server 304. In a second transparent caching scheme (referred to as the "redirection model" in the related application, and depicted herein by FIG. 3B), the interceptor 302 may intercept a web browser request destined for a URL in the web server 110 and redirects the web browser to the cache server 304 by sending a redirect response to the web browser so that the web browser thereafter sends another request directly to the cache server 304.

In both transparent caching schemes, subsequent client requests to other web pages referenced in the web page must also be intercepted and redirected by the interceptor 302. This interception is inefficient in both transparent caching schemes, but is particularly inefficient in the redirection model due to the additional request/response exchange between the web browser and the cache server 304.

In a preferred embodiment of the present invention, the cache server 304 uses dynamic resource modification to redirect web page references to the cache server 304 so that the interceptor 302 does not have to intercept and redirect subsequent client requests to the referenced web pages. Specifically, the cache server 304 receives the web page from the web server 110 and replaces web page references in the web page with modified web page references including a reference to the cache server 304 or other cache server (referred to hereinafter as "resource translation"). The modified web page including the modified web page references is sent to the web browser. Subsequent web browser requests to web pages referenced in the modified web page are directed to the cache server 304 or other cache server rather than to the web server 110, and therefore are not intercepted and redirected by the interceptor 302.

More specifically, subsequent to receiving the web page from the web server 110 and prior to sending the web page to the web browser, the cache server 304 searches through the web page to find the web page references. In HTML, many web page references begin with the text string "href" or "src" and include a URL for the referenced web page. It should be noted that the URL in the web page reference can be an absolute URL in the form of the URL 200 (that is, a URL including the scheme 202, the destination server host name 204, and path 206) or a relative URL including only the path 206 representing a relative path from the web page to the referenced web page.

For each web page reference found in the web page, the cache server 304 determines whether or not to modify the web page reference. In a preferred embodiment of the present invention, web page references that are already directed to the cache server 304 are not modified by the cache server 304, while web page references that are directed to other servers, such as the web server 110, are modified by the cache server 304. In an alternative embodiment of the present invention, the cache server 304 maintains a list of cache servers, and web page references that are already directed to one of the listed cache servers are not modified by the cache server 304, while web page references that are directed to other servers are modified by the cache server 304 by selecting one of the listed cache servers.

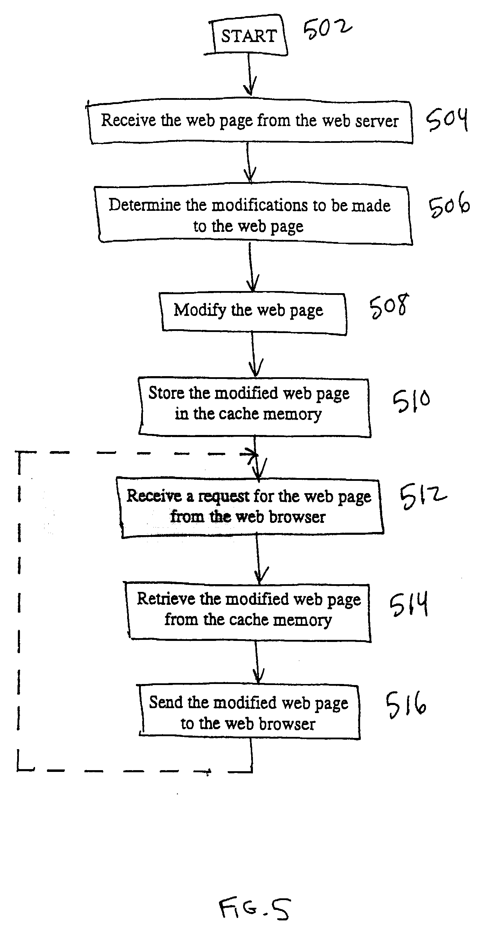

In order to modify a web page reference, the cache server 304 replaces the original URL with a modified URL including a reference to the cache server 304 or other cache server selected by the cache server 304. FIG. 4 shows the format of a modified URL 400 used in a preferred embodiment of the present invention. The modified URL 400 includes the scheme 202 from the original URL, a cache server host name 402 indicating the name of a cache server (such as the cache server 304), the destination server host name 204 from the original URL, and the path 206 from the original URL. For example, if the text string "http://www.web-server.com/directory/subdirectory/filename" is the original URL from the original web page reference, then the text string "http://www.cache-server.com/www.web-server.com/directory/subdirectory/filename" is an exemplary modified URL, where "http" is the scheme from the original URL, "www.cache-server.com" is the cache server host name, and "www.web-server.com" is the destination server host name from the original URL, and "/directory/subdirectory/filename" is the path from the original URL.

When the web browser attempts to access one of the referenced web pages from the modified web page, the modified URL is included in the web browser request. The web browser request is routed directly to the cache server 304 or other cache server, as indicated in the modified URL. Upon receiving the web browser request, the cache server 304 or other cache server extracts the destination server host name 204 and path 206 from the modified URL, and uses the extracted information to retrieve the corresponding web page from the cache memory. If the corresponding web page is not already stored in the cache memory, then the cache server 304 or other cache server retrieves the web page from the web server 110 and stores it in the cache memory for future requests.

In one transparent caching embodiment of the present invention, the web page modifications are made before storing the web page in the cache memory. In this embodiment, the cache server 304 receives the web page from the destination server 110, modifies the web page, and stores the modified web page in the cache memory. When the cache server 304 receives a request for the web page from the web browser, the cache server 304 retrieves the modified web page from the cache memory and sends the modified web page to the web browser. By storing the modified web page in the cache memory, the cache server 304 only needs to modify the web page once, and the web page can be accessed quickly by the web browser.

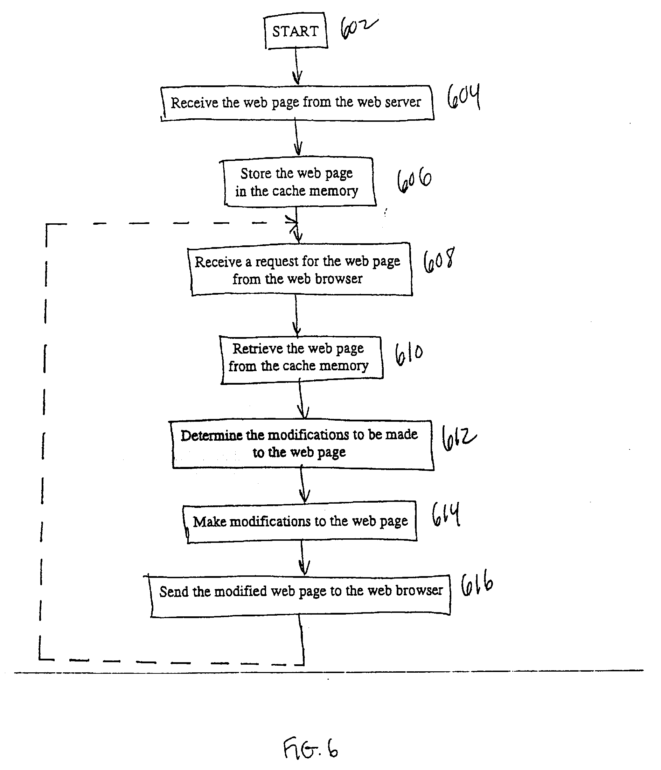

FIG. 5 is a logic flow diagram showing cache server 304 logic in which the cache server 304 makes web page modifications before storing the web page in the cache memory. The logic begins at step 502, and upon receiving the web page from the web server 110, in step 504, proceeds to determine the modifications to be made to the web page, in step 506. The cache server 304 then modifies the web page, in step 508, and stores the modified web page in the cache memory, in step 510. Thereafter, each time the cache server 304 receives a request for the web page from the web browser, in step 512, the cache server 304 retrieves the modified web page from the cache memory, in step 514, and sends the modified web page to the web browser, in step 516.

In another transparent caching embodiment of the present invention, the web page modifications are made dynamically when the web page is requested by the web browser. In this embodiment, the cache server 304 receives the web page from the web server 110 and stores the web page in the cache memory. When the cache server 304 receives a request for the web page from the web browser, the cache server 304 retrieves the web page from the cache memory, modifies the web page, and sends the modified web page to the web browser. By storing the original web page in the cache memory and modifying the web page dynamically when the web page is requested by the web browser, the cache server 304 can customize the modifications specifically for the web browser. However, because the cache server 304 is required to modify the web page for each request, each request requires more time to process by the cache server 304.

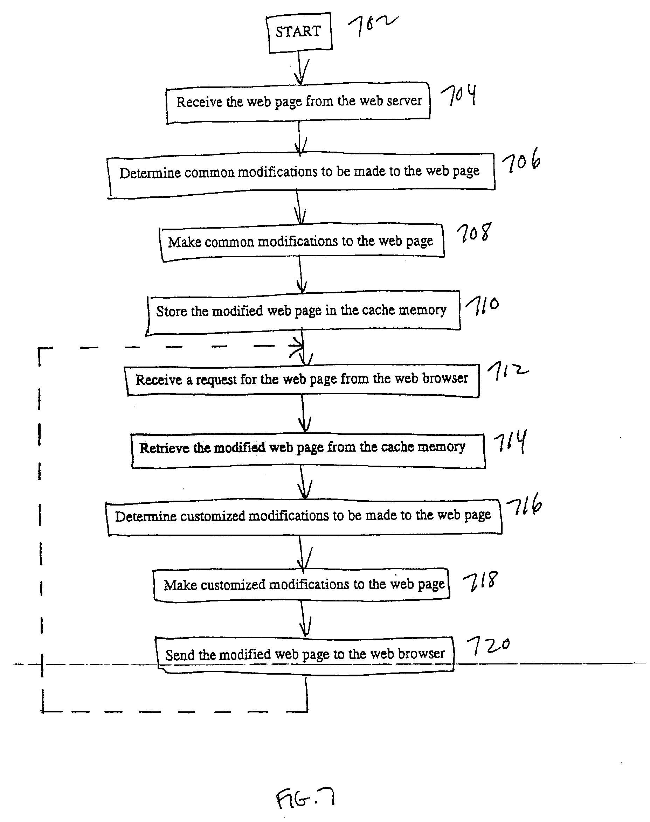

FIG. 6 is a logic flow diagram showing cache server 304 logic in which the cache server 304 makes web page modifications dynamically when the web page is requested by the web browser. The logic begins at step 602, and upon receiving the web page from the web server 110, in step 604, proceeds to store the web page in the cache memory, in step 606. Thereafter, each time the cache server 304 receives a request for the web page from the web browser, in step 608, the cache server 304 retrieves the web page from the cache memory, in step 610 and determines the modifications to be made to the web page, in step 612. The cache server 304 then modifies the web page, in step 614, and sends the modified web page to the web browser, in step 616.

In yet another transparent caching embodiment of the present invention, the cache server 304 makes some modifications before storing the modified web page in the cache memory and makes other modifications dynamically when the web page is requested by the web browser. In this embodiment, the cache server 304 receives the web page from the destination server 110, makes any modifications to the web page that are common to all web browsers, and stores the modified web page in the cache memory. When the cache server 304 receives a request for the web page from the web browser, the cache server 304 retrieves the modified web page from the cache memory, makes any customized modifications to the modified web page specifically for the web browser, and sends the twice-modified web page to the web browser. By making standard modifications to the web page prior to storing the modified web page in the cache memory and making customized modifications upon receiving a request for the web page from the web browser, the cache server 304 can customize the modifications specifically for the web browser while minimizing the time required to process the request by the cache server 304.

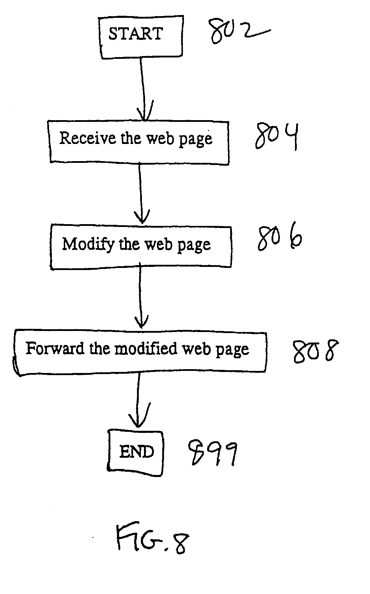

FIG. 7 is a logic flow diagram showing cache server 304 logic in which the cache server 304 makes common web page modifications before storing the web page in the cache memory and makes custom web page modifications dynamically when the web page is requested by the web browser. The logic begins at step 702, and upon receiving the web page from the web server 110, in step 704, proceeds to determine a set of common modifications to be made to the web page, in step 706. The cache server 304 then makes the common modifications to the web page, in step 708, and stores the modified web page in the cache memory, in step 710. Thereafter, each time the cache server 304 receives a request for the web page from the web browser, in step 712, the cache server 304 retrieves the modified web page from the cache memory, in step 714, proceeds to determine a set of custom modifications to be made to the web page specifically for the web browser, in step 716. The cache server 304 then makes the custom modifications to the web page, in step 718, and sends the twice-modified web page to the web browser, in step 720.

While the preferred embodiment of the present invention utilizes dynamic resource modification by a cache server in a transparent caching scheme, dynamic resource modification is in no way limited to the cache server or to transparent caching applications. Rather, dynamic resource modification can be performed on any element of the web page by any device, including multiple devices, through which the web page passes. Thus, dynamic resource modification can be embodied in the cache server 304, the interceptor 302, the client computer 102, the web browser, and/or any intermediate communication devices within the Internet 106, and can be used to change any element of the web page including the text, video, audio, or web page references.

Thus, any device, including the cache server 304, can use dynamic resource modification to redirect web browser requests to a cache server. Upon receiving the web page, the device searches the web page for web page references, and, for each web page reference found in the web page, determines whether or not to modify the web page reference. In an exemplary embodiment of the present invention, the device maintains a list of cache servers, and web page references that are already directed to one of the listed cache servers are not modified by the device, while web page references that are directed to other servers are modified by the device by selecting one of the listed cache servers and replacing the original URL with a modified URL including a reference to the selected cache server, preferably in the form of the URL 400.

Also, any device, including the cache server 304, can use dynamic resource modification to delete a web page reference from a web page. Specifically, the device searches the web page for web page references (that is, HTML entries starting with the text string "href" or "src"), selects a web page reference to be deleted, and deletes the selected web page reference from the web page by removing the HTML entry from the web page. Deleting a web page reference can be used, for example, to eliminate a link to an undesirable web page.

Furthermore, any device, including the cache server 304, can use dynamic resource modification to substitute a new web page reference in place of the original web page reference in order to redirect the client to the new web page. Specifically, the device searches the web page for web page references (that is, HTML entries starting with the text string "href" or "src"), selects a web page reference to be modified, selects the new web page to be substituted for the selected web page reference, and modifies the HTML entry to include the URL for the new web page. Substituting a web page reference can be used, for example, to customize the web page for a particular web browser, to add local content into the web page, or to simply divert the web browser to the new web page.

Moreover, any device, including the cache server 304, can use dynamic resource modification to interject one or more web pages before the web browser is given access to the referenced web page, such that the web browser is forced to retrieve the one or more web pages before retrieving the referenced web page. Interjecting one or more web pages can be used, for example, to insert an advertisement before the web browser accesses the referenced web page, to insert a warning message before the web browser accesses the referenced web page, or to insert a password protection scheme for an otherwise unprotected web page.

One way to interject one or more web pages is to return an interjected web page in place of a requested web page. Specifically, upon receiving a request for a web page, the device returns an interjected web page instead of the requested web page. The interjected web page typically includes a link to another interjected web page or to the originally requested web page.

Another way to interject one or more web pages is to modify the web page by replacing or modifying a web page link to reference an interjected web page. Specifically, the device searches the web page for web page references (that is, HTML entries starting with the text string "href" or "src"), selects a web page reference, and modifies the HTML entry to include a URL referencing an interjected web page. In a preferred embodiment, the URL referencing the interjected web page is a URL in the form of the URL 400 including at least the destination server host name and path from the original web page reference.

Additionally, any device, including the cache server 304, can use dynamic resource modification to add a new web page reference into a web page. Adding a web page reference can be used, for example, to customize the web page for a particular client or to add local content into the web page. As an example of the latter, a device could insert a list of "hot links" on every web page so that users have quick access to important information.

Finally, any device, including the cache server 304, can use dynamic resource modification to delete, modify, or add any other elements of the web page, including text, video, and audio elements.

Although dynamic resource modification is performed by the cache server 304 in a preferred embodiment of the present invention, certain advantages may be realized by performing dynamic resource modification within the client computer 102, for example, by the web browser or other component within the client computer 102. By incorporating dynamic resource modification logic into a component within the client computer 102, the consumer may be given direct control over the types of modifications that are made to web pages that are accessed via the web browser. Thus, for example, a parent may be able to configure the web browser or other component to perform local, automatic filtering of web page references in order to limit access to certain specific web pages or types of web pages by a child, specifically by deleting HTML entries referencing certain undesirable web pages. Also, users may insert bookmarks or "hot links" that are displayed at the top or bottom of every web page, or may integrate programs on the local machine as links on the web page, thus effectively turning the web browser into a desktop. Other applications for local filtering will become apparent to the skilled artisan through an understanding of the techniques of the present invention.

Thus, a device in accordance with the present invention includes logic for performing the steps shown in FIG. 8. Specifically, the device begins in step 802, and upon receiving the web page, in step 804, proceeds to modify the web page, in step 806. Modifying the web page can include deleting an HTML entry from the web page, modifying an HTML entry in the web page, and adding an HTML entry into the web page. After modifying the web page, in step 806, the device forwards the modified web page, in step 808, and terminates in step 899.

In a preferred embodiment of the present invention, predominantly all of the dynamic resource modification logic is implemented as a set of computer program instructions that are stored in a computer readable medium and executed by an embedded microprocessor system within a device such as the cache server 304, the client computer 102, the web browser, the interceptor 302, and/or other devices within the communication system 100. Preferred embodiments of the invention may be implemented in any conventional computer programming language. For example, preferred embodiments may be implemented in a procedural programming language (*e.g.*, "C") or an object oriented programming language (*e.g*., "C++"). Alternative embodiments of the invention may be implemented using discrete components, integrated circuitry, programmable logic used in conjunction with a programmable logic device such as a Field Programmable Gate Array (FPGA) or microprocessor, or any other means including any combination thereof.

Alternative embodiments of the invention may be implemented as a computer program product for use with a computer system. Such implementation may include a series of computer instructions fixed either on a tangible medium, such as a computer readable media (*e.g*., a diskette, CD-ROM, ROM, or fixed disk), or fixed in a computer data signal embodied in a carrier wave that is transmittable to a computer system via a modem or other interface device, such as a communications adapter connected to a network over a medium. The medium may be either a tangible medium (*e.g.*, optical or analog communications lines) or a medium implemented with wireless techniques (*e.g*., microwave, infrared or other transmission techniques). The series of computer instructions embodies all or part of the functionality previously described herein with respect to the system. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (*e.g*., shrink wrapped software), preloaded with a computer system (*e.g*., on system ROM or fixed disk), or distributed from a server or electronic bulletin board over the network (*e.g*., the Internet or World Wide Web).

Thus, the present invention may be embodied as a method for dynamically modifying resources in a web page by a device in a communication system involving receiving a web page, modifying the web page, and forwarding the modified web page. More particularly, the web page includes a number of elements, typically HyperText Markup Language entries. Modifying the web page may include deleting an element from the web page, modifying an element in the web page, or adding an element to the web page. A modified entry may include a modified web page reference, such as a substitute web page or an interjected web page, or a reference to a cache server.

The present invention may also be embodied as a method for dynamically modifying resources in a web page by a cache server in a communication system. The cache server may modify the web page prior to storing the web page in a cache memory, after storing the web page in the cache memory, or both.

The present invention may also be embodied as a program product comprising a computer readable medium having embodied therein a computer program for dynamically modifying resources in a web page by a device in a communication system, where the computer program includes receiving logic programmed to receive a web page, dynamic resource modification logic operably coupled to modify the web page, and forwarding logic operably coupled to forward the modified web page.

The present invention may also be embodied as a device for dynamically modifying resources in a web page in a communication system, where the device includes receiving logic operably coupled to receive a web page, dynamic resource modification logic operably coupled to modify the web page, and forwarding logic operably coupled to forward the modified web page.

The present invention may be embodied in other specific forms without departing from the essence or essential characteristics. The described embodiments are to considered in all respects only as illustrative and not restrictive.

## Claims

1. A method for dynamically modifying resources in a web page, the method comprising the steps of:
receiving a web page;
modifying the web page; and
forwarding the modified web page.

2. The method of claim 1, wherein the web page includes a number of elements, said elements preferably each being a HyperText Markup Language entry.

3. The method of claim 2, wherein the step of modifying the web page comprises:
deleting an element from the web page;
modifying an element in the web page; or
adding an element to the web page.

4. The method of claim 3, wherein the element is an original web page reference, and wherein the step of modifying the element in the web page comprises replacing the original web page reference with a modified web page reference.

5. The method of claim 4, wherein the original web page reference is a first Universal Resource Locator, and wherein the modified web page reference is a second Universal Resource Locator, said modified web page reference preferably identifies:
a substituted web page, and wherein the second Universal Resource Locator is a Universal Resource Locator for the substituted web page;
a cache server, and wherein the second Universal Resource Locator comprises a cache server host name associated with the cache server; or
an interjected web page, and wherein the second Universal Resource Locator is a Universal Resource Locator for the interjected web page.

6. The method of claim 5, wherein the first Universal Resource Locator comprises a scheme, a destination server host name, and a path, and wherein the second Universal Resource Locator comprises the scheme from the first Universal Resource Locator, the cache server host name, the destination server host name from the first Universal Resource Locator, and the path from the first Universal Resource Locator.

7. The method of any preceding claim, operable in a cache server, and wherein the method comprises the steps of:
making a number of modifications to the web page that are common to at least a plurality and preferably all serviceable web browsers;
storing the modified web page in a cache memory;
receiving a request for the web page from a web browser;
retrieving the modified web page from the cache memory; and
transmitting the modified web page to the web browser.

8. The method of claim 7, wherein the method further comprises:
making a second number of modifications to the web page that are customized for the web browser.

9. The method of any preceding claim, operable in a cache server, and wherein the method comprises the steps of:
storing the web page in a cache memory;
receiving a request for the web page from a web browser;
retrieving the web page from the cache memory;
making a number of modifications to the web page that are customized for the web browser; and
transmitting the modified web page to the web browser.

10. A computer program element comprising computer program code means to make a control processor execute procedure to perform the method steps of any preceding claim.

11. The computer program element of claim 10, embodied on a computer readable medium.

12. A device for dynamically modifying resources in a web page in a communication system, the device comprising:
receiving logic operably coupled to receive a web page;
dynamic resource modification logic operably coupled to modify the web page; and
forwarding logic operably coupled to forward the modified web page.

13. The device of claim 12, wherein the dynamic resource modification logic comprises:
element deletion logic operably coupled to delete an element from the web page;
element modification logic operably coupled to modify an element in the web page; or
element addition logic operably coupled to add an element to the web page.

14. The device of claim 13, wherein the element is an original web page reference, and wherein the element modification logic is operably coupled to replace the original web page reference with a modified web page reference.

15. The device of claim 14, wherein the original web page reference is a first Universal Resource Locator, and wherein the modified web page reference is a second Universal Resource Locator, wherein said modified web page reference preferably identifies:
a substituted web page, and wherein the second Universal Resource Locator is a Universal Resource Locator for the substituted web page;
a cache server, and wherein the second Universal Resource Locator comprises a cache server host name associated with the cache server; or
an interjected web page, and wherein the second Universal Resource Locator is a Universal Resource Locator for the interjected web page.

16. The device of claim 15, wherein the first Universal Resource Locator comprises a scheme, a destination server host name, and a path, and wherein the second Universal Resource Locator comprises the scheme from the first Universal Resource Locator, the cache server host name, the destination server host name from the first Universal Resource Locator, and the path from the first Universal Resource Locator.

17. The device of any of claims 12 to 16, wherein the device is a cache server, and wherein:
the dynamic resource modification logic is configured to make a number of modifications to the web page that are common to at least some and preferably all serviceable web browsers;
storage logic is operable to store the modified web page in a cache memory;
retrieval logic is operable to retrieve the modified web page from the cache memory upon receiving a request for the web page from a web browser; and
the forwarding logic is operable to forward the modified web page to the web browser.

18. The device of any of claims 12 to 17, wherein the device is a cache server, and wherein the computer program comprises:
storage logic arranged to store the web page in a cache memory;
retrieval logic arranged to retrieve the web page from the cache memory upon receiving a request for the web page from a web browser;
the dynamic resource modification logic arranged to make a number of modifications to the web page that are customized for the web browser; and
the forwarding logic arranged to forward the modified web page to the web browser.

19. The device of claims 17 or 18, wherein the device is a cache server, and wherein the computer program comprises:
dynamic resource modification logic arranged to make a first number of modifications to the web page that are common to all web browsers;
retrieval logic arranged to retrieve the web page from the cache memory upon receiving a request for the web page from a web browser; and
the dynamic resource modification logic arranged to make a second number of modifications to the web page that are customized for the web browser.
